(19) Europäisches Patentamt
European Patent Office
Office européen des brevets

(11) **EP 3 444 639 A1**

(12) **EUROPEAN PATENT APPLICATION**

(43) Date of publication:
**20.02.2019 Bulletin 2019/08**

(51) Int Cl.:
***G01T 3/06*** (2006.01)

(21) Application number: **17001389.0**

(22) Date of filing: **15.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Paul Scherrer Institut**
**5232 Villigen PSI (CH)**

(72) Inventors:
• **MOSSET, Jean-Baptiste**
**CH-5200 Brugg (CH)**
• **STOYKOV, Alexey**
**CH-5233 Stilli (CH)**
• **HOFER, Andreas**
**CH-5018 Erlinsbach (CH)**
• **HILDEBRANDT, Malte**
**CH-4053 Basel (CH)**

(74) Representative: **Fischer, Michael**
**Siemens AG**
**Postfach 22 16 34**
**80506 München (DE)**

(54) **FAST NEUTRON DETECTOR BASED ON PROTON RECOIL DETECTION IN A COMPOSITE SCINTILLATOR WITH EMBEDDED WAVELENGTH-SHIFTING FIBERS**

(57) A fast neutron detector with high detection efficiency and very low gamma sensitivity is disclosed. The detector is composed of an assembly of individual detection elements. Each detection element (100) comprises a block of composite scintillator (102) that contains embedded wavelength-shifting fibers (101) uniformly distributed in the scintillator block, which provide a uniform and efficient collection of the scintillation light. The composite scintillator (102) is made of inorganic scintillating grains dispersed in a hydrogenous and optically transparent binder. The most probable interaction of the fast neutrons in the scintillator is the elastic scattering on a hydrogen nucleus of the binder that results in a recoil proton. The recoil proton travels through several scintillation grains producing scintillation light. The wavelength-shifting fibers (102) of a detection element (100) are coupled to one or more photosensors (105) that are read out individually.

FIG. 1

**Description**

The present invention relates to the field of neutron detection, and more particularly to high efficiency fast neutron detectors with low gamma sensitivity. Examples of applications in which the disclosed detector is particularly well suited are radiation portal monitors for the detection of special nuclear materials, neutron resonance radiography for the detection of explosives, neutron monitoring with directional and spectroscopic capabilities, nuclear material assay, and spent nuclear fuel characterization.

Radiation portal monitors used in homeland security must be able to detect small quantities of special nuclear materials, even when these materials are heavily shielded. Presently, the neutron detection systems which are used in radiation portal monitors suffer from one or more of the following drawbacks: high sensitivity to the natural neutron background, high sensitivity to gamma-rays, use of expensive signal processing systems, low neutron detection efficiency.

Most of the neutron detection systems used in radiation portal monitors nowadays consists of thermal neutron detectors in conjunction with moderators. Moderators are materials that contain a high density of hydrogen, like for example polyethylene or polymethyl methacrylate. Neutrons that are emitted by special nuclear materials have an energy ranging approximately between 0.5 MeV and 8 MeV. When they reach the detection system, they are first slowed down in the moderator, mainly by elastic scattering processes on hydrogen or carbon nuclei until their energy becomes close to 25 meV, the thermal neutron energy. The thermalized neutrons are then detected by thermal neutron detectors. The detection of thermal neutrons requires a nuclear absorption reaction resulting in the emission of energetic charged particles.

There are only a few isotopes, like helium-3, lithium-6, or boron-10, which provide a proper nuclear reaction to be utilized in a thermal neutron detector. Helium-3 proportional counters, boron-lined proportional counter, or detectors using $ZnS(Ag):^6LiF$ neutron detection screens are the main thermal neutron detectors used for radiation portal monitors. An example of $ZnS:^6LiF$ thermal neutron detector is described in the U.S. Pat. No. 8,330,115 "High performance neutron detector with near zero gamma cross talk". In one embodiment, the detector consists of a plurality of detector elements being interposed with moderator material from about 0.25 inches up to about 3 inches thick. In this embodiment, a detector element can consist of a layer of $ZnS:^6LiF$ scintillator with embedded wavelength shifting fibers.

Thermal neutron detection systems have a rather large neutron detection efficiency of about 15% and a low gamma-ray sensitivity. However, they are particularly sensitive to the natural neutron background. On the contrary, fast neutron detectors can reject about 98% of the neutron background by focusing on the energy of interest from 0.5 MeV to 10 MeV or more. Some liquid or solid organic scintillators are sensitive to both fast neutrons and gamma-rays and allow for pulse shape discrimination between neutron and gamma-ray events. However, their gamma-ray rejection efficiency is limited to about $10^{-4}$ and this pulse shape discrimination requires an expensive signal processing system. In addition, liquid scintillators are flammable and toxic. Neutron scintillation detectors based on high-pressure $^4$He have a low gamma-ray sensitivity but their fast neutron detection efficiency is rather low. For example, a 5 cm diameter detection tube filled with 200 bar of $^4$He has a fast neutron detection efficiency of about 2%.

In fast neutron radiography, a typical detector consists of a 2 mm thick ZnS(Ag) scintillating screen read out with a CCD camera. This type of detector has a good spatial resolution due to the small light dispersion in the scintillating screen, but its neutron sensitivity is low.

A different approach has been reported by Yubin Zou, et al., in "Development of a converter made of scintillator and wavelength-shifting fibers for fast neutron radiography", Nuclear Instrument and Methods in physics Research A, vol. 605, p. 73, 2009. In this approach, the detector contains a ZnS(Ag) scintillator block having an optimal thickness of about 30 mm, in which embedded wavelength-shifting fibers run along the neutron trajectory. The rear side of the block is read out with a CCD camera. This approach provides a neutron sensitivity about one order of magnitude higher than the previously mentioned approach.

Nonetheless, these two approaches suffer from the fact that the readout based on a CCD camera does not allow the discrimination between neutrons and gamma-rays.

It is therefore the objective of the present invention to provide a fast neutron detector that allows the processing of the signal produced by each individual neutron, thereby being capable of discriminating between fast neutrons of interest and gamma-rays in the background.

This objective is achieved according to the present invention by a fast neutron detector, comprising:

a) at least one detection element having a sensitive volume,
b) said sensitive volume comprises a block of composite scintillator,
c) said block of composite scintillator comprises a hydrogenous and optically transparent or translucide binder in which inorganic scintillating grains are dispersed;
d) a number of wavelength-shifting fibers that are distributed, preferably uniformly, in said block of composite scintillator;

e) a photosensor associated with said number of wavelength-shifting fibers; and

f) an evaluation unit for analyzing the light intensities recorded by the photosensor.

This detector can provide at the same time a high neutron detection efficiency, a low sensitivity to the natural neutron background, and a low sensitivity to gamma-rays.

In order to properly detect the light indirectly generated by the incident neutron, said number of wavelength-shifting fibers of the at least one detection element may be bundled all together and coupled to one photosensor, either on one side or on both sides of the sensitive volume of the at least one detection element.

In order to provide a more pixelated set-up, the sensitive volume of the at least one detection element may be subdivided into detection pixels by bundling together the wavelength-shifting fibers that belong to the same detection pixel and coupling each bundle of wavelength-shifting fibers to a different photosensor, either on one side or on both sides of the sensitive volume of the detection element.

In order to distinguish the thermal neutrons that come along with the fast neutron, the fast neutron detector may comprise in said block of composite scintillator neutron absorber grains dispersed in the hydrogenous and optically transparent or translucide binder, in addition to the inorganic scintillating grains; and the evaluation unit may apply a pulse shape discrimination method in order to distinguish thermal neutrons which are detected along with the fast neutrons from the fast neutrons.

Preferred embodiments of the present invention are hereinafter described in more detail with reference to the attached drawings which depict in:

FIG. 1      a lateral cross-section of a detection element, wherein the wavelength-shifting fibers are bundled all together and coupled to one photosensor, on one side of the sensitive volume of the detection element;

FIG. 2      a longitudinal cross-section of a detection element, wherein the wavelength-shifting fibers are bundled all together and coupled to one photosensor, on one side of the sensitive volume of the detection element;

FIG. 3      a lateral cross-section of a detection element, wherein the wavelength-shifting fibers are bundled all together and coupled to one photosensor, on both sides of the sensitive volume of the detection element;

FIG. 4      a longitudinal cross-section of a detection element, wherein the wavelength-shifting fibers are bundled all together and coupled to one photosensor, on both sides of the sensitive volume of the detection element;

FIG. 5      a lateral cross-section of a detection element, wherein the sensitive volume is subdivided into detection pixels by bundling together the wavelength-shifting fibers that belong to the same detection pixels and coupling each bundle of wavelength-shifting fibers to a different photosensor, on one side of the sensitive volume of the detection element;

FIG. 6      a longitudinal cross-section of a detection element, wherein the sensitive volume is subdivided into detection pixels by bundling together the wavelength-shifting fibers that belong to the same detection pixels and coupling each bundle of wavelength-shifting fibers to a different photosensor, on one side of the sensitive volume of the detection element;

FIG. 7      a lateral cross-section of a detection element, wherein the sensitive volume is subdivided into detection pixels by bundling together the wavelength-shifting fibers that belong to the same detection pixels and coupling each bundle of wavelength-shifting fibers to a different photosensor, on both sides of the sensitive volume of the detection element; and

FIG. 8      a longitudinal cross-section of a detection element, wherein the sensitive volume is subdivided into detection pixels by bundling together the wavelength-shifting fibers that belong to the same detection pixels and coupling each bundle of wavelength-shifting fibers to a different photosensor, on both sides of the sensitive volume of the detection element.

A new fast neutron detector is disclosed. This detector can provide at the same time high neutron detection efficiency, low sensitivity to the natural neutron background, and low sensitivity to gamma-rays. The detector comprises either a single detection element or an assembly of detection elements whose the sensitive volume is a block of composite scintillator in which embedded wavelength-shifting fibers are uniformly distributed. In the detailed description, several embodiments of detection elements are described, and the detection principle is explained.

As required, detailed embodiments of the present invention are disclosed herein; however, it is to be understood that the disclosed embodiments are merely examples of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure and function. Further, the terms and phrases used herein are not intended to be limiting, but rather, to provide an understandable description of the invention.

The term "fast neutrons" is conventionally defined as neutrons with a kinetic energy in excess of 0.1 MeV. The disclosed detector comprises at least one detection element whose the sensitive volume comprises a block of composite scintillator in which wavelength-shifting fibers are uniformly distributed. The composite scintillator comprises inorganic scintillating grains dispersed in a hydrogenous and optically transparent or translucide binder. The scintillating grains can be for example silver activated ZnS denoted ZnS(Ag), zinc activated ZnO denoted ZnO(Zn), gallium activated ZnO denoted ZnO(Ga), or any combination thereof. The binder material can be for example polyethylene, an epoxy resin, polymethyl methacrylate, or a room temperature vulcanization silicone, or water. In the latter case, a watertight container is entirely filled with scintillating grains and the interstices between the scintillating grains are filled up with water. In that case, the block of composite scintillator is to be understood as the content of the watertight container. The water content acts here as an optical couplant rather than as a real binder.

Optionally, the composite scintillator can also include neutron absorber grains containing $^6$Li or $^{10}$B isotopes, like for example $^6$LiF grains. Functionally, the scintillation grains have a significant difference to the neutron absorber grains. While the scintillation grains upon an incident fast neutron generate light due to ionization by the recoil proton generated by the fast neutron without undergoing a structural change, the neutron absorber grains "catch" the thermal neutrons and undergo a structural change, since the content of $^6$Li or $^{10}$B isotopes in neutron absorber grains dispersed in a hydrogenous and transparent binder (e.g. epoxy glue or Plexiglas) changes isotope-wise. Without neutron absorber grains (e.g. $^6$LiF), thermal neutrons cannot be detected.

With $^6$Li isotopes, the detection process is:

$$^6Li + n \rightarrow alpha\text{-}particle\ (2\ MeV) + triton\ (2.7\ MeV).$$

The two energetic particles which are produced after the capture of a thermal neutron by a $^6$Li isotope ionize the scintillating grains that produces light.

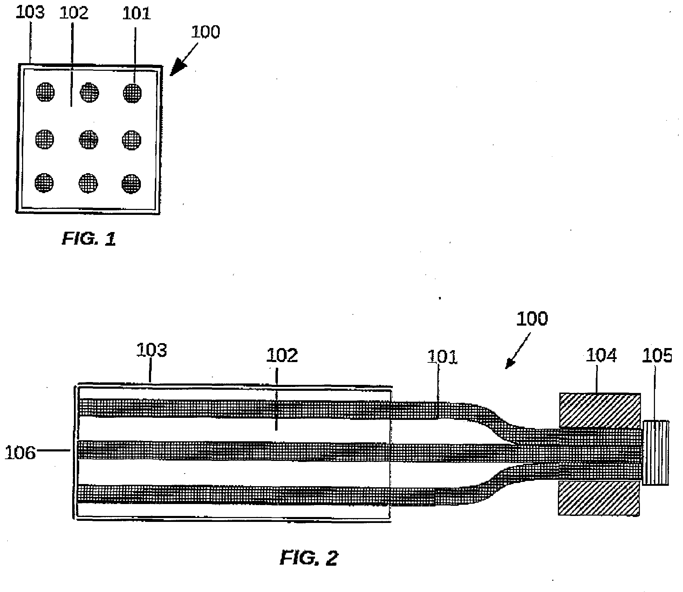

A first embodiment of a detection element 100 is illustrated in FIG. 1 and FIG. 2, which show a lateral and a longitudinal cross-section of the detection element, respectively. In this embodiment, the block of composite scintillator 102 of the detection element 100 has the shape of a rectangular parallelepiped. In other embodiments, the block of composite scintillator could have any other shape, like for example, a polygonal prism or a cylinder. The wavelength-shifting fibers 101 are parallel to one edge of the block of composite scintillator 102. In a lateral cross-section, the wavelength-shifting fibers 101 form an upright square lattice. In another embodiment, the wavelength-shifting fibers could form a different lattice, for example, an hexagonal lattice.

The lateral surface of the block of composite scintillator 102 is optionally covered with an opaque material 103 which provides an optical isolation between adjacent detection elements. Optionally, the opaque material 103 can be glued to the lateral surface of the block of composite scintillator 102. The opaque material 103 can be for example an aluminized mylar® foil.

On one side of the block of composite scintillator 102, the wavelength-shifting fibers 101 are bundled all together and glued into a hole in a holder 104, and polished afterwards. The holder 104 can be made of polymethyl methacrylate, for example. The bundle of wavelength-shifting fibers 101 is optically coupled to a photosensor 105, for example with clear epoxy or grease, or simply with a physical contact. The photosensor 105 can be for example a single channel silicon photomultiplier, a pixel element of a silicon photomultiplier array, a photomultiplier tube, or a pixel element of a multi-anode photomultiplier tube. On the other side of the block of composite scintillator 102, the wavelength-shifting fibers 101 are cut, polished, and optionally, coated or covered with a specular reflector 106 like for example an aluminized mylar® foil, in order to increase the light yield at the other end of the wavelength-shifting fibers 101 which is optically coupled to a photosensor 105.

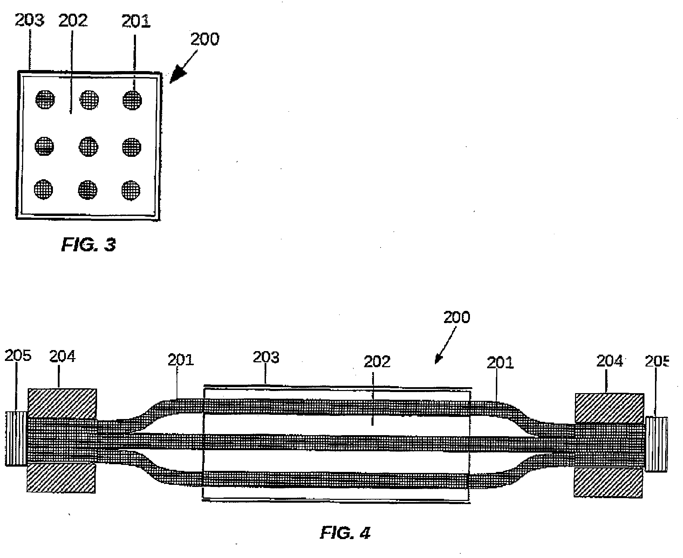

A second embodiment of a detection element is illustrated in FIG. 3 and FIG. 4, which show a lateral and a longitudinal cross-section of the detection element, respectively. In this second embodiment, the block of composite scintillator 202 of the detection element 200 has the shape of a rectangular parallelepiped. In other embodiments, the block of composite scintillator 202 could have any other shape, like for example, a polygonal prism or a cylinder. The wavelength-shifting fibers 201 are parallel to one edge of the block of composite scintillator 202. In a lateral cross-section, the wavelength-shifting fibers 201 form an upright square lattice. In another embodiment, the wavelength-shifting fibers 201 could form a different lattice, for example, a hexagonal lattice.

The lateral surface of the block of composite scintillator 202 is optionally covered with an opaque material 203

which provides an optical isolation between adjacent detection elements. Optionally, the opaque material **203** can be glued to the lateral surface of the block of composite scintillator **202.** The opaque material **203** can be for example an aluminized mylar® foil.

On both sides of the block of composite scintillator **202,** the wavelength-shifting fibers **201** are bundled all together and glued into a hole in a holder **204** and polished afterwards. The holder **204** can for example be made of polymethyl methacrylate. Each bundle of wavelength-shifting fibers **201** is optically coupled to a photosensor **205,** for example with clear epoxy or grease, or simply with a physical contact. The photosensors **205** can be for example single channel silicon photomultipliers, pixel elements of a silicon photomultiplier array, photomultiplier tubes, or a pixel elements of a multi-anode photomultiplier tube.

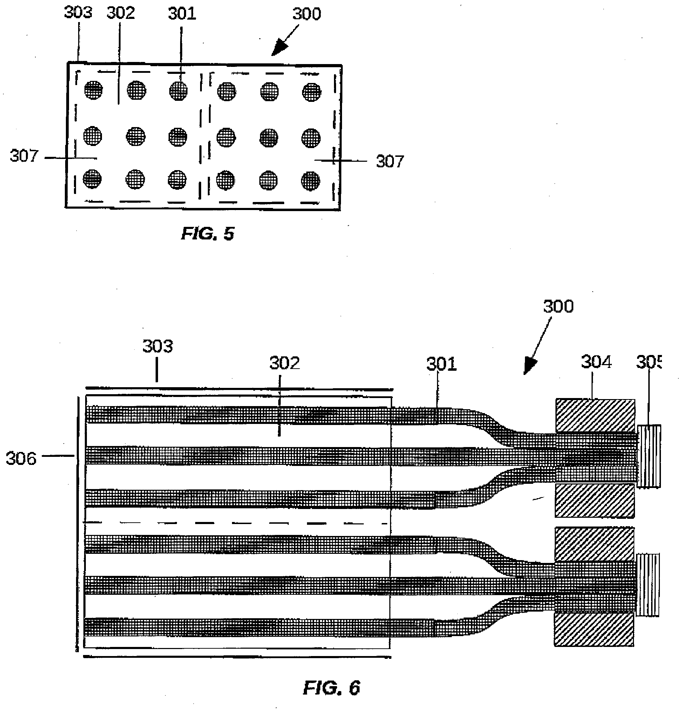

A third embodiment of a detection element is illustrated in FIG. 5 and FIG. 6, which show a lateral and a longitudinal cross-section of the detection element, respectively. In this third embodiment, the block of composite scintillator **302** of the detection element **300** has the shape of a rectangular parallelepiped. In other embodiments, the block of composite scintillator could have any other shape, like for example, a polygonal prism or a cylinder. The wavelength-shifting fibers **301** are parallel to one edge of the block of composite scintillator **302.** In a lateral cross-section, the wavelength-shifting fibers **301** form an upright square lattice. In another embodiment, the wavelength-shifting fibers **301** could form a different lattice, for example, an hexagonal lattice.

The lateral surface of the block of composite scintillator **302** is optionally covered with an opaque material **303** that provides an optical isolation between adjacent detection elements. Optionally, the opaque material **303** can be glued to the surface of the block of composite scintillator **302.** The opaque material **303** can be for example an aluminized mylar® foil.

The sensitive volume of the detection element **300** is subdivided into detection pixels **307** by bundling together, on one side of the block of composite scintillator **302,** the wavelength-shifting fibers **301** that belong to the same detection pixel. In FIG. 5 and FIG. 6, the dashed lines represent the boundaries of the detection pixels **307.**

Each bundle of wavelength-shifting fibers **301** is glued into a hole in a holder **304,** and polished afterwards. The holder **304** can be made of polymethyl methacrylate, for example. Each bundle of wavelength-shifting fibers **301** is optically coupled to a photosensor **305,** for example with clear epoxy or grease, or simply with a physical contact. The photosensors **305** can be for example single channel silicon photomultipliers, pixel elements of a silicon photomultiplier array, photomultiplier tubes, or pixel elements of a multi-anode photomultiplier tube.

On the other side of the block of composite scintillator **302,** the wavelength-shifting fibers are cut, polished, and optionally, coated or covered with a specular reflector **306** like for example an aluminized mylar® foil, in order to increase the light yield at the other end of the wavelength-shifting fibers **301** which is, optically coupled to a photosensor **305.**

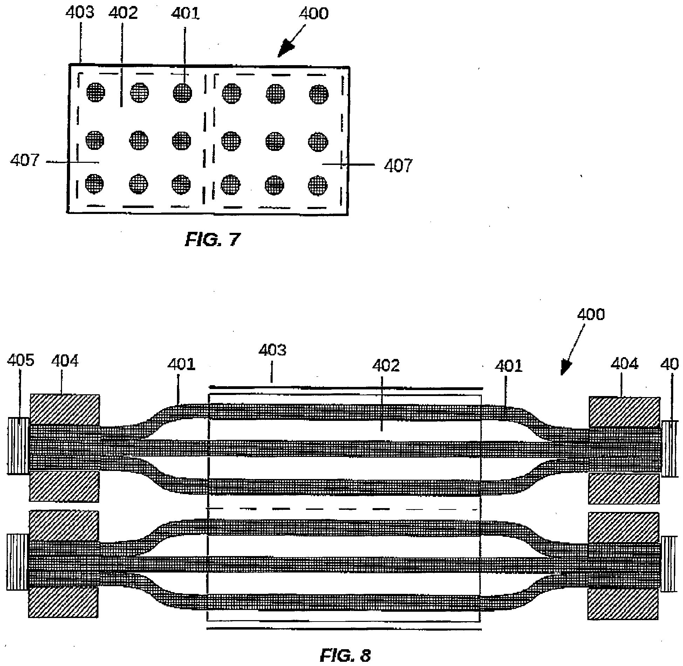

A fourth embodiment of a detection element is illustrated in FIG. 7 and FIG. 8, which show a lateral and a longitudinal cross-section of the detection element, respectively. In this fourth embodiment, the block of composite scintillator **402** of the detection element **400** has the shape of a rectangular parallelepiped. In other embodiments, the block of composite scintillator **402** could have any other shape, like for example, a polygonal prism or a cylinder. The wavelength-shifting fibers **401** are parallel to one edge of the block of composite scintillator **402.** In a lateral cross-section, the wavelength-shifting fibers **401** form an upright square lattice. In another embodiment, the wavelength-shifting fibers **401** could form a different lattice, for example, an hexagonal lattice.

The lateral surface of the block of composite scintillator **402** is optionally covered with an opaque material **403** which provides an optical isolation between adjacent detection elements. Optionally, the opaque material **403** can be glued to the lateral surface of the block of composite scintillator **402.** The opaque material **403** can be for example an aluminized mylar® foil. The sensitive volume of the detection element **400** is subdivided into detection pixels **407** by bundling together, on both sides of the block of composite scintillator **402,** the wavelength-shifting fibers **401** that belong to the same detection pixel. In FIG. 7 and FIG. 8, the dashed lines represent the boundaries of the detection pixels **407.**

Each bundle of wavelength-shifting fibers **401** is glued into a hole in a holder **404,** and polished afterwards. The holder **404** can be made of polymethyl methacrylate, for example. Each bundle of wavelength-shifting fibers **401** is optically coupled to a photosensor **405,** for example with clear epoxy or grease, or simply with a physical contact. The photosensors **405** can be for example single channel silicon photomultipliers, pixel elements of a silicon photomultiplier array, photomultiplier tubes, or pixel elements of a multi-anode photomultiplier tube.

In the detection elements **100, 200, 300, 400,** the bundles of wavelength-shifting fibers are directly optically coupled to photosensors. In slightly different embodiments, the photosensors could be indirectly optically coupled to the bundles of wavelength-shifting fibers via clear optical fibers, light concentrators, or lenses, for example. Such couplings are known to those skilled in the art.

In the detection elements **100,** and **300,** only one end of the wavelength-shifting fibers is coupled to a photo sensor. The other end, the "free", or uncoupled end, is cut very close to the block of composite scintillator and polished with it. In slightly different embodiments, the "free" end of the wavelength-shifting fibers could stick out of the block of composite scintillator, so that the wavelength-shifting fibers could, for example, be bundled all together and glued into a hole in a holder, and polished afterwards.

In the detection element **300,** the bundles of wavelength-shifting fibers are all located on the same side of the block of composite scintillator. In slightly different embodiments, the bundles of wavelength-shifting fibers might not be all located on the same side of the block of composite scintillator, but they could for example be located alternatively on one side and on the other side of the block of composite scintillator.

In the detection elements **100, 200, 300, 400,** the sensitive volume consists of a single block of composite scintillator. In slightly different embodiments, the sensitive volume could be segmented, in other words, the sensitive volume could consist of several blocks of composite scintillator, which would be juxtaposed, either longitudinally or laterally.

In the detection elements **100, 200, 300, 400,** the wavelength-shifting fibers are bundled outside the block of composite scintillator. In a slightly different embodiment, the block of composite scintillator could extend up to the holder for the wavelength-shifting fibers.

In detection systems aiming to detect concealed neutron sources, e.g. Pu, it might be useful to measure the count rate of thermal neutrons in addition to the count rate of fast neutrons. With these two information, it would be possible to extract information about the eventual shielding of the source. This would also allow two have two alarm thresholds, one on the count rate of fast neutrons and one on the count rate of thermal neutrons. If the source to be detected has a high activity and is not heavily shielded, the alarm could be triggered by both fast and thermal neutrons. But when the source has a small activity or if it is heavily shielded, it could be that only the alarm based on the count rate of fast neutrons or only the alarm based on the count rate of thermal neutrons be triggered, depending on the nature of the shielding. Hence, the capability to measure both the count rate of fast neutrons and the count rate of thermal neutrons would improve the performance of these detection systems.

In the detection elements 100, 200, 300, 400, the block of composite scintillator should preferably not comprise neutron absorber grains if no pulse shape discrimination method to discriminate between fast and thermal neutrons is applied in the evaluation unit of the detector. In that case, the presence of neutron absorber grains would increase dramatically the sensitivity to the natural neutron background of the fast neutron detector. However, if a pulse shape discrimination method to discriminate between fast and thermal neutrons is applied in the evaluation unit of the detector, the detection of thermal neutrons can be favorable. So, in different embodiments, the composite scintillator could comprise neutron absorber grains in order to allow the detection of thermal neutrons along with fast neutrons, while a discrimination between fast and thermal neutrons would be performed by applying a pulse shape discrimination method in the evaluation unit. This pulse shape discrimination is only possible if the pulses, namely, the shapes of the temporal profiles of the light intensities recorded by the photosensors, are different for fast and for thermal neutrons: In the case of a composite scintillator comprising ZnS scintillating grains, a significant difference in the pulse shapes has been measured for fast neutrons and for thermal neutrons. The ratio between the average number of photons measured during the first 500 ns and 5000 ns of the pulses amounts to 0.4 and 0.31 for fast neutrons and thermal neutrons, respectively. Pulse shape discrimination methods are known by those skilled in the art.

The most probable conversion process between a fast neutron and a charged particle in the sensitive volume of a detection element is the elastic scattering on a hydrogen nucleus of the binder material, which results in a recoil proton. In this conversion process, the energy received by the proton follows a continuous and uniform probability density function whereby the distribution's support ranges from 0 to the energy of the incident neutron. With a probability depending on the energy received by the recoil proton and on different characteristics of the composite scintillator (e.g., the concentration of scintillating grains in the composite scintillator), the recoil proton travels through one or several scintillating grains, which generate the emission of photons. A fraction of these photons are then absorbed in the nearby wavelength-shifting fibers, which reemit photons at a longer wavelength. In each of these wavelength-shifting fibers, the photons that are emitted in the acceptance cone can propagate through the wavelength-shifting fiber up to the photosensor which is coupled to it. The electronic signal produced by the photosensor in response to the detected photons must then be processed in a suitable way depending on the photosensor type, the scintillator characteristics (e.g., decay time, light yield), and the detector requirements concerning for example the count rate capability, the time resolution, or the capability to discriminate neutron and gamma-ray events. Many different signal processing approaches are known by those skilled in the art.

The reactions $^{32}S(n,p)^{32}P$ and $^{64}Zn(n,p)^{64}Cu$ are two other conversion processes which become non negligible for fast neutrons of 3 MeV or more. In these reactions, the emitted proton receives almost all the energy of the incident neutron.

In the applications related to the detection of special nuclear materials, the most probable energy and the average energy of the neutrons to be detected are about 0.7 MeV and 2 MeV, respectively. This means that most of the recoil protons produced by the fast neutrons interacting in the detector have an energy lower than 2 MeV and a range lower than 70 $\mu$m in polystyrene. Consequently, the large majority of the recoil protons which are emitted in the wavelength-shifting fibers do not reach the scintillator and therefore cannot be detected. The volume occupied by the wavelength-shifting fibers in the block of composite scintillator constitutes a dead space. In order to minimize it, one has to use wavelength-shifting fibers of small cross-section, like for example wavelength-shifting fibers with 250 $\mu$m diameter.

In order to have a good collection of the scintillation light, the pitch of the wavelength-shifting fibers in the block of composite scintillator needs to be adapted accordingly to the transmission of the scintillation light in the composite scintillator. For example, in a block of ZnS(Ag) scintillator, a fiber pitch of 0.8 mm provides a good light collection efficiency which is relatively independent of the emission position of the protons in the block of composite scintillator.

**Claims**

1.  A fast neutron detector, comprising:

    a) at least one detection element having a sensitive volume,
    b) said sensitive volume comprises a block of composite scintillator,
    c) said block of composite scintillator comprises a hydrogenous and optically transparent or translucide binder in which inorganic scintillating grains are dispersed;
    d) a number of wavelength-shifting fibers that are distributed, preferably uniformly, in said block of composite scintillator;
    d) a photosensor associated with said number of wavelength-shifting fibers; and
    e) an evaluation unit for analyzing the light intensities recorded by the photosensor.

2.  The fast neutron detector according to claim 1, wherein said number of wavelength-shifting fibers of the at least one detection element are bundled all together and coupled to one photosensor, either on one side or on both sides of the sensitive volume of the at least one detection element.

3.  The fast neutron detector according to claim 1, wherein the sensitive volume of the at least one detection element is subdivided into detection pixels by bundling together the wavelength-shifting fibers that belong to the same detection pixels and coupling each bundle of wavelength-shifting fibers to a different photosensor, either on one side or on both sides of the sensitive volume of the detection element.

4.  The fast neutron detector according to any of the preceding claims 1, wherein:

    a) said block of composite scintillator comprises neutron absorber grains dispersed in the hydrogenous and optically transparent or translucide binder, in addition to the inorganic scintillating grains; and
    b) the evaluation unit applies a pulse shape discrimination method in order to distinguish thermal neutrons which are detected along with the fast neutrons from the fast neutrons.

203  202  201  200

FIG. 3

200

205  204  201  203  202  201  204  205

FIG. 4

103 102 101

100

**FIG. 1**

100

103 102 101 104 105

106

**FIG. 2**

**FIG. 5**

**FIG. 6**

403 402 401 400

407 407

**FIG. 7**

405 404 401 403 402 401 400 404 40

**FIG. 8**

Europäisches
Patentamt

European
Patent Office

Office européen
des brevets

## EUROPEAN SEARCH REPORT

Application Number

EP 17 00 1389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ZOU Y ET AL: "Development of a converter made of scintillator and wavelength-shifting fibers for fast neutron radiography", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 605, no. 1-2, 21 June 2009 (2009-06-21), pages 73-76, XP026871978, ISSN: 0168-9002 [retrieved on 2009-02-04] * abstract * * section 2. WSF converter * * section 3. Tests and discussions * * figures 1-3 * | 1 | INV. G01T3/06 |
| X | US 2012/317791 A1 (FRANK DAVID L [US]) 20 December 2012 (2012-12-20) | 1-3 | |
| Y | * figures 9A, 9B, 9C, 10A, 10B, 10C, 14 * * paragraph [0046] * * paragraphs [0092] - [0093] * * paragraph [0097] * * paragraph [0099] * * paragraphs [0105] - [0114] * * paragraphs [0128] - [0130] * * claim 15 * | 4 | TECHNICAL FIELDS SEARCHED (IPC) G01T |

-/--

The present search report has been drawn up for all claims

| Place of search | Date of completion of the search | Examiner |
|---|---|---|
| The Hague | 12 February 2018 | Santen, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 00 1389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 3 707 631 A (UNTERMYER SAMUEL) 26 December 1972 (1972-12-26) * abstract * * figures 1, 2 * * column 1, lines 50-55 * * column 2, lines 14-28 * * column 2, lines 54-59 * * column 4, line 64 - column 5, line 19 * * column 5, lines 60-66 * ----- | 4 | |
| Y | M. SHARMA ET AL: "Triple pulse shape discrimination and capture-gated spectroscopy in a composite heterogeneous scintillator", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 857, 11 June 2017 (2017-06-11), pages 75-81, XP055450303, NL ISSN: 0168-9002, DOI: 10.1016/j.nima.2017.03.019 * abstract * ----- | 4 | |
| A | US 2002/141529 A1 (OLSHER RICHARD H [US] ET AL) 3 October 2002 (2002-10-03) * abstract * * figure 1 * * paragraphs [0025] - [0027] * ----- | 1-4 | |

TECHNICAL FIELDS
SEARCHED (IPC)

The present search report has been drawn up for all claims

| Place of search | Date of completion of the search | Examiner |
|---|---|---|
| The Hague | 12 February 2018 | Santen, Nicole |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 00 1389

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | | Publication date | Patent family member(s) | | Publication date |
|---|---|---|---|---|---|
| US 2012317791 | A1 | 20-12-2012 | US 2010294415 A1<br>US 2012317791 A1 | | 25-11-2010<br>20-12-2012 |
| US 3707631 | A | 26-12-1972 | NONE | | |
| US 2002141529 | A1 | 03-10-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 8330115 B

**Non-patent literature cited in the description**

• **YUBIN ZOU et al.** Development of a converter made of scintillator and wavelength-shifting fibers for fast neutron radiography. *Nuclear Instrument and Methods in physics Research A,* 2009, vol. 605, 73